# EUROPÄISCHE PATENTSCHRIFT

(11) **EP 0 348 747 B1**
(45) Veröffentlichungstag und Bekanntmachung des Hinweises auf die Patenterteilung: **27.10.1993**
(21) Anmeldenummer: 89110874.8
(22) Anmeldetag: 15.06.1989
(51) Int. Cl.: G01D 5/24, G01F 1/712

(54) **Schaltungsanordnung zur Signalgewinnung bei einem kapazitiven Differenzsensor**
Circuit arrangement for a differential capacitive sensor
Arrangement de circuit pour capteur capacitif différentiel

(30) Priorität: 30.06.1988 DE 3822076
(43) Veröffentlichungstag der Anmeldung: 03.01.1990
(73) Patentinhaber: Endress u. Hauser GmbH u. Co., D-79689 Maulburg (DE)
(72) Erfinder: Braun, Hans, Dr., D-7500 Karlsruhe 1 (DE); Kessler, Uwe, D-6836 Oftersheim (DE)
(74) Vertreter: Leiser, Gottfried, Dipl.-Ing.

(56) Entgegenhaltungen:
- EP-A- 0 265 237
- WO-A-80/02070
- US-A- 4 274 137

## Beschreibung

Die Erfindung betrifft einen kapazitiven Differenzsor mit einer Schaltungsanordnung zur Signalgewinnung mit zwei Sensorelektroden, von denen jede einer von einer elektrischen Wechselspannungsquelle gespeisten Geberelektrode gegenüberliegt, wobei die Schaltungsanordnung so ausgebildet ist, daß sie ein Differenzsignal erzeugt, das der Differenz der in den beiden Sensorelektroden influenzierten Verschiebungsströme entspricht.

Kapazitive Differenzsensoren dieser Art, die beispielsweise aus der DE-OS 34 33 148 bekannt sind, werden vorzugsweise zur Signalgewinnung für die berührungslose korrelative Laufzeit- oder Geschwindigkeitsmessung und für ähnliche Zwecke verwendet.

Sie ergeben den Vorteil, daß sie auch bei größeren Abmessungen ein gutes räumliches Auflösungsvermögen unter weitgehender Gleichsignalunterdrückung ergeben. Zur Unterdrückung der Einflüsse von Massekapazität ist bei der aus der DE-OS 34 33 148 bekannten Schaltungsanordnung jede Sensorelektrode mit dem invertierenden Eingang eines zugeordneten Operationsverstärkers verbunden, dessen nichtinvertierender Eingang auf dem Massepotential liegt, so daß die beiden Sensorelektroden virtuell auf dem Massepotential gehalten werden. Die Operationsverstärker verstärken getrennt die Ausgangssignale der beiden Sensorelektroden, und das Differenzsignal wird durch Bildung der Differenz der verstärkten Ausgangssignale der beiden Operationsverstärker erhalten.

Ein wesentliches Problem bei dieser Art der Signalgewinnung besteht darin, daß bereits die Grundkapazität des von jeder Sensorelektrode mit der Geberelektrode gebildeten Kondensators sehr klein ist, und daß die zu erfassenden Kapazitätsänderungen, die den eingentlichen Meßeffekt darstellen, nochmals um Größenordnungen kleiner sind. Bedingt durch die geometrischen Abmessungen liegt die Kapazität solcher Sensoren im Bereich von weniger als einem Pikofarad, und die zu erfassenden Kapazitätsänderungen liegen in der Größenordnung von wenigen Femtofarad. Um Kapazitätsänderungen in dieser Größenordnung meßtechnisch erfassen zu können, ist ein hohes Auflösungsvermögen der Verstärkerelektronik erforderlich. Die Signalgewinnung erweist sich insbesondere deshalb als sehr schwierig, weil kapazitive Sensoren sehr empfindlich auf äußere Störeinflüsse reagieren, die oft den eigentlichen Meßeffekt um ein Vielfaches übersteigen. Wenn beispielsweise die Strömungsgeschwindigkeit von pneumatisch transportierten Materialien mit Hilfe kapazitiver Sensoren korrelativ gemessen werden soll, kann der Einfluß von häufig auftretenden elektrostatisch geladenen Teilchen auf das primäre Meßsignal den durch die Veränderung der Meßkapazität verursachten Effekt um ein Vielfaches übersteigen. Durch die anschließende Demodulation und Filterung des aus den verstärkten primären Meßsignalen gewonnenen Differenzsignals können solche Störeinflüsse trotz großen Schaltungsaufwands oft nicht mehr unterdrückt werden.

Aufgabe der Erfindung ist die Schaffung einer Schaltungsanordnung der eingangs angegebenen Art, die mit geringem Schaltungsaufwand eine gute Unterdrückung sowohl des Einflusses von Massekapazitäten als auch von äußeren Störeinflüssen auf das nutzbare Meßsignal ermöglicht.

Nach der Erfindung wird diese Aufgabe dadurch gelöst, daß die beiden Sensorelektroden über den Eingängen eines Übertragers gegensinnig an einander gekoppelt sind, wobei der Übertrager mit seinen Ausgängen an einen Serienschwingkreis angekoppelt ist, dessen Resonanzfrequenz der Frequenz der Wechselspannungsquelle entspricht, und daß das Differenzsignal am Abgriff des Serienschwingkreises abgegriffen wird.

Bei der Schaltungsanordnung nach der Erfindung wird bereits der Meßvorgang selbst frequenzselektiv durchgeführt, indem die Sensorelektroden über einen Übertrager an einen Serienschwingkreis angekoppelt sind, dessen Resonanzfrequenz der Betriebsfrequenz entspricht. Hierdurch kann eine sehr niedrige Eingangsimpedanz erzielt werden, durch die der Einfluß von Massekapazitäten unterdrückt wird. Gleichzeitig wird der Übertrager dazu verwendet, die Differenz zwischen den Signalen der beiden Sensorelektroden vor der Verstärkung passiv zu bilden, so daß nur das interessierende Differenzsignal verstärkt werden muß.

Vorteilhafte Ausgestaltungen und Weiterbildungen der Erfindung sind in den Unteransprüchen gekennzeichnet.

Weitere Vorteile und Merkmale der Erfindung ergeben sich aus der folgenden Beschreibung von Ausführungsbeispielen, die in der Zeichnung dargestellt sind. In der Zeichnung zeigt:
- Fig. 1: eine schematische Darstellung einer Anordnung zur korrelativen Geschwindigkeitsmessung mit zwei kapazitiven Differenzsensoren als Anwendungsbeispiel für die Erfindung,
- Fig. 2: ein Diagramm zur Erläuterung der Funktionsweise eines der kapazitiven Differenzsensoren von Fig. 1,
- Fig. 3: eine Ausführungsform einer der beiden Signalgewinnungsschaltungen der Anordnung von Fig. 1 und
- Fig. 4: eine andere Ausführungsform einer der beiden Signalgewinnungsschaltungen der Anordnung von Fig. 1.

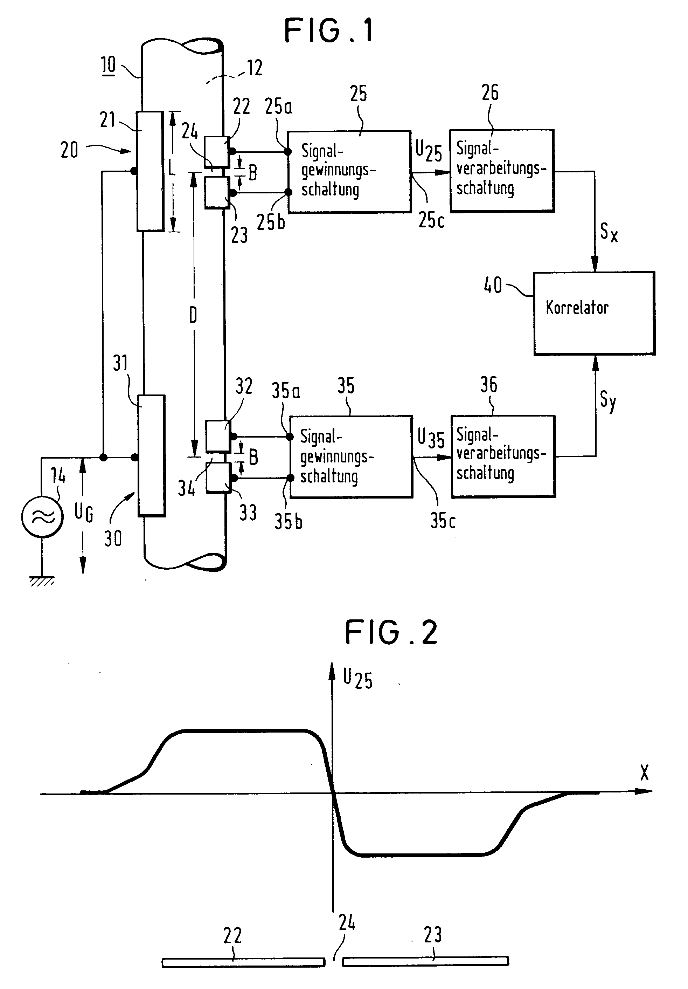

Fig. 1 zeigt als Beispiel für die Anwendung von kapazitiven Differenzsensoren die korrelative Messung der Geschwindigkeit eines durch eine Rohrleitung 10 transportierten Mediums 12. Zu diesem Zweck sind zwei kapazitive Differenzsensoren 20 und 30 entlang der Rohrleitung 10 in einem definierten Abstand D voneinander angeordnet. Der kapazitive Differenzsensor 20 enthält eine Geberelektrode 21 und zwei Sensorelektroden 22 und 23, die der Geberelektrode 21 so gegenüberliegen, daß das Medium 12 durch den Zwischenraum zwischen der Geberelektrode und jeder der beiden Sensorelektroden hindurchströmt. Die Elektroden können an der Außenseite der Rohrleitung 10 angebracht sein, wenn diese aus einem dielektrischen Material besteht. Die beiden Sensorelektroden 22 und 23 folgen in der Strömungsrichtung mit geringem Abstand aufeinander, so daß zwischen ihnen ein Spalt 24 besteht, dessen Breite B klein gegen die in der Strömungsrichtung gemessenen Abmessungen der Geberelektrode 21 und der Sensorelektroden 22, 23 ist. Die in der Strömungsrichtung gemessene Länge L der Geberelektrode 21 ist größer als die Ausdehnung der beiddn Sensorelektroden 22, 23 in dieser Richtung und auch größer als der effektive Abstand zwischen der Geberelektrode 21 und jeder Sensorelektrode 22 bzw. 23.

Die Sensorelektrode 22 bildet mit der Geberelektrode 21 einen Kondensator mit der Kapazität C₂₂, und die Sensorelektrode 23 bildet in gleicher Weise mit der Geberelektrode 21 einen Kondensator mit der Kapazität C₂₃. Die Kapazitäten C₂₂ und C₂₃ hängen von den Elektrodenabmessungen, dem Elektrodenabstand und der Dielektrizitätskonstante des zwischen den Elektroden befindlichen Dielektrikums ab. Das Dielektrikum ist im wesentlichen durch das Medium 12 gebildet, das durch die Rohrleitung 10 fließt und dessen Geschwindigkeit gemessen werden soll.

Die Geberelektrode 21 ist mit dem einen Pol einer Wechselspannungsquelle 14 verbunden, deren anderer Pol auf einem Bezugspotential liegt, das in der Darstellung von Fig. 1 das Massepotential ist. Die Wechselspannungsquelle 14 legt eine Wechselspannung U_{G} der Frequenz f_{G} gegenüber dem Bezugspotential an die Geberelektrode 21 an.

Die Sensorelektrode 22 ist mit einem Eingang 25a einer elektronischen Signalgewinnungsschaltung 25 verbunden, und die Sensorelektrode 23 ist mit dem anderen Eingang 25b der elektronischen Signalgewinnungsschaltung 25 verbunden. Die Signalgewinnungsschaltung 25 ist so ausgebildet, daß sie auf die Verschiebungsströme anspricht, die infolge der von der Wechselspannungsquelle 14 an die Geberelektrode 21 angelegten Wechselspannung U_{G} in jeder Sensorelektrode 22 und 23 influenziert werden, und sie gibt an ihrem Ausgang 25c ein Signal U₂₅ ab, das der Differenz der in den beiden Sensorelektroden 22 und 23 influenzierten Verschiebungsströmen entspricht.

Wenn die Sensorelektroden 22 und 23 gleiche Abmessungen haben und wenn zunächst angenommen wird, daß das von dem Medium 12 gebildete Dielektrikum homogen ist, sind die Kapazitäten C₂₂ und C₂₃ gleich groß, und demzufolge sind auch die aufgrund der Wechselspannung U_{G} in den Sensorelektroden 22 und 23 influenzierten Verschiebungsströme gleich groß. Das Ausgangssignal U₂₅ der Signalgewinnungsschaltung 25 hat dann den Wert Null. Auf diese Weise sind die Gleichsignalanteile, die in den von den beiden Sensorelektroden 22 und 23 abgegebenen Signalen enhalten sind, im Ausgangssignal U₂₅ unterdrückt. Insbesondere sind auch alle Störeinflüsse, die sich in gleicher Weise auf die Signale der beiden Sensorelektroden 22 und 23 auswirken, im Ausgangssignal U₂₅ unterdrückt.

Diese Wirkung ergibt sich im übrigen nicht nur dann, wenn das vom Medium 12 gebildete Dielektrikum vollkommen homogen ist, sondern auch bei inhomogenem Dielektrikum, soweit die Inhomogenitäten statistisch so verteilt sind, daß die mittleren Kapazitäten C₂₂ und C₂₃ der von den Sensorelektroden gebildeten Kondensatoren gleich groß sind. Dies kann beispielsweise dann der Fall sein, wenn das Medium 12 eine Vielzahl feiner, gleichmäßig verteilter Partikel enthält. Die beschriebene Ausbildung ergibt somit einen Ausgleich der mittleren Grundkapazität, und zwar unabhängig von der kapazitiven Belastung.

Wenn dagegen eine räumliche Inhomogenität des vom Medium 12 gebildeten Dielektrikums auftritt, durch die das Gleichgewicht der mittleren Kapazitäten C₂₂ und C₂₃ gestört wird, ändern sich die Kapazitäten C₂₂ und C₂₃ in Abhängigkeit von der Lage der Inhomogenität längs der Achse des Rohres 10 unterschiedlich. Das Ausgangssignal U₂₅ der Signalgewinnungsschaltung 25 nimmt dann einen von der Differenz der Kapazitäten C₂₂ und C₂₃ abhängigen Wert an.

Fig. 2 zeigt als Beispiel das Ausgangssignal U₂₅ der Signalgewinnungsschaltung 25 als Funktion der Lage einer Inhomogenität längs der Achse X des Rohres 10 im Bereich der Sensorelektroden 22 und 23. Der Ursprung des Koordinatensystems entspricht der Mitte des Spaltes 24 zwischen den beiden Sensorelektroden 22, 23, die zum Vergleich unter der X-Achse dargestellt sind.

Wenn sich die Inhomogenität in der Richtung der Achse X in größerer Entfernung von den beiden Sensorelektroden 22 und 23 befindet, hat das Ausgangssignal U₂₅ den Wert Null, weil dann die Wirkung der Inhomogenität auf die beiden Sensorelektroden sehr gering und näherungsweise gleich ist.

Bei Annäherung der Inhomogenität an die Sensorelektrode 22 steigt das Ausgangssignal U₂₅ in positiver Richtung an, bis es einen Maximalwert erreicht, den es im wesentlichen während des gesamten Vorbeigangs der Inhomogenität an der Sensorelektrode 22 beibehält.

Wenn die Inhomogenität den Spalt 24 erreicht, fällt das Ausgangssignal U₂₅ steil ab, und es geht durch Null, wenn die Inhomogenität symmetrisch zur Mitte des Spaltes 24 steht. Jenseits des Nulldurchgangs geht das Ausgangssignal U₂₅ mit gleicher Steilheit auf einen negativen Maximalwert, den es im wesentlichen während des ganzen Vorbeigangs der Inhomogenität an der Sensorelektrode 23 beibehält.

Aus dem mit steilem Gradient erfolgenden Nulldurchgang des Ausgangssignals U₂₅ läßt sich die mittige Lage der Inhomogenität zum Spalt 24 mit großer Genauigkeit bestimmen. Hierfür ist nur die Lage der Inhomogenität in der Richtung X maßgeblich, während die Lage der Inhomogenität relativ zu den Sensorelektroden quer zur Richtung X keinen Einfluß auf das Meßergebnis hat. Der Gradient in der Umgebung des Nulldurchgangs ist an allen Stellen quer zur Richtung X in der Mitte des Spaltes 24 maximal.

Die Vorteile der Verwendung eines kapazitiven Differenzsensors anstelle eines einfachen kapazitiven Sensors mit nur einer Sensorelektrode ergeben sich aus den zuvor geschilderten Eigenschaften der Unterdrückung von Gleichsignalanteilen und von gleichsinnig wirkenden Störeinflüssen sowie des hohen Auflösungsvermögens bei der Bestimmung des Durchgangs von Inhomogenitäten durch eine definierte, quer zur Meßrichtung liegende Ebene. Praktisch ergibt sich dadurch die Wirkung eines Ortsfrequenzfilters mit Bandpaßcharakteristik. Dies vereinfacht die Signalverarbeitung, weil eine elektronische Filterung weitgehend entfallen kann. Der Ortsfrequenzgang kann durch die Geometrie der Sensorelektroden beeinflußt werden.

Da die Speisung der Geberelektrode 21 durch eine Wechselspannung erfolgt, haben die zuvor geschilderten Auswirkungen von Inhomogenitäten eine Amplitudenmodulation der durch die Wechselspannung influenzierten Verschiebungswechselströme zur Folge. In der Signalgewinnungsschaltung 25 muß daher zur Gewinnung des Ausgangssignals U₂₅ eine Demodulation erfolgen, beispielsweise durch eine phasenempfindliche Gleichrichtung.

Zur korrelativen Messung der Geschwindigkeit des durch die Rohrleitung 10 transportierten Mediums 12 werden zwei Signale Sₓ und S_{y} benötigt, die an zwei in der Strömungsrichtung gegeneinander versetzten Stellen abgegriffen und dann miteinander korreliert werden. Das eine Signal Sₓ kann unmittelbar das Ausgangssignal U₂₅ der Signalgewinnungsschaltung 25 sein oder aus diesem abgeleitet werden. Das andere Signal S_{y} wird in entsprechender Weise durch den zweiten kapazitiven Differenzsensor 30 gebildet. Der Differenzsensor 30 hat genau den gleichen Aufbau wie der Differenzsensor 20 mit einer an die Spannungsquelle 14 angeschlossenen Geberelektrode 31 und mit zwei Sensorelektroden 32 und 33, zwischen denen ein Spalt 34 der Breite B besteht und die mit den beiden Eingängen 35a bzw. 35b einer elektronischen Signalgewinnungsschaltung 35 verbunden sind. Die Signalgewinnungsschaltung 35 gibt an ihrem Ausgang 35c ein Ausgangssignal U₃₅ ab, das der Differenz der in den beiden Sensorelektroden 32 und 33 influenzierten Verschiebungsströme entspricht.

Die Ausgangssignale U₂₅ und U₃₅ der beiden Signalgewinnungsschaltungen 25 bzw. 35 werden den beiden Eingängen eines Korrelators 40 als die zu korrelierenden Signale Sₓ und S_{y} zugeführt. Wenn der Korrelator 40 so ausgebildet ist, daß er die Ausgangssignale U₂₅, U₃₅ unmittelbar verarbeiten kann, können seine Eingänge direkt an die Ausgänge der Signalgewinnungsschaltungen 25, 35 angeschlossen sein. Andernfalls ist, wie in Fig. 1 dargestellt ist, zwischen den Ausgang jeder Signalgewinnungsschaltung und den zugeordneten Eingang des Korrelators 40 eine Signalverarbeitungsschaltung 26 bzw. 36 eingefügt, welche die Ausgangssignale der Signalgewinnungsschaltung in eine für die Verarbeitung durch den Korrelator 40 geeignete Form bringt.

Der Korrelator 40 bildet in der bei der korrelativen Laufzeit- oder Geschwindigkeitsmessung bekannten Weise die Kreuzkorrelationsfunktion der beiden Signale Sₓ und S_{y}, indem er Augenblickswerte des Signals S_{y} mit um veränderliche Verschiebungszeiten verzögerten Augenblickswerten des Signals Sₓ multipliziert und den Mittelwert der Produkte über eine bestimmte Beobachtungszeit bildet. Für jeden Wert der Verschiebungszeit erhält man einen Stützwert der Kreuzkorrelationsfunktion. Bei dem dargestellten Anwendungsfall hat die Kreuzkorrelationsfunktion ein Maximum bei einer bestimmten Verschiebungszeit, die gleich der Laufzeit des Mediums vom Differenzsensor 20 zum Differenzsensor 30 ist. Dies beruht darauf, daß die räumlichen Inhomogenitäten des Dielektrikums beim Durchgang durch die Spalte der beiden Differenzsensoren in den Ausgangssignalen Schwankungen der in Fig. 2 gezeigten Art erzeugen, die gewisse Ähnlichkeiten aufweisen. Da der Abstand D zwischen den Spalten 24 und 34 der beiden Differenzsensoren 20 und 30 genau bekannt ist, kann aus der ermittelten Laufzeit leicht die Strömungsgeschwindigkeit des Mediums 12 berechnet werden.

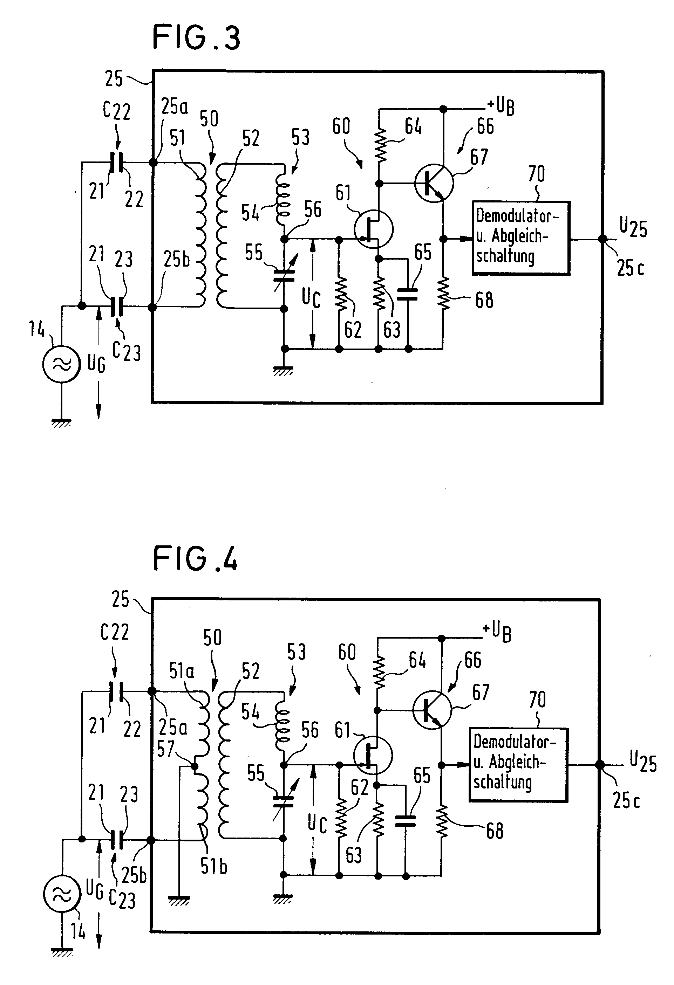

In Fig. 3 ist ein erstes Ausführungsbeispiel der Signalgewinnungsschaltung 25 von Fig. 1 dargestellt. Die beiden Sensorkapazitäten C₂₂ und C₂₃, die von den Sensorelektroden 22 bzw. 23 mit den ihnen gegenüberliegenden Abschnitten der Geberelektrode 21 gebildet sind, sind symbolisch durch Kondensator-Schaltzeichen dargestellt. Die der Geberelektrode 21 entsprechenden Belegungen dieser Kondensatoren sind, wie in Fig. 1 gegenüber dem Massepotential an die von der Wechselspannungsquelle 14 gelieferte Wechselspannung U_{G} mit der Frequenz f_{G} gelegt.

Die Signalgewinnungsschaltung 25 enthält als Eingangsglied einen Übertrager 50 mit einer Primärwicklung 51 und einer Sekundärwicklung 52. Die Klemmen der Primärwicklung 51 entsprechen den Eingangsklemmen 25a, 25b von Fig. 1. Die Sensorelektroden 22 und 23 sind somit unmittelbar mit der einen bzw. der anderen Klemme der Primärwicklung 51 verbunden.

An die Sekundärwicklung 52 ist ein Serienschwingkreis 53 angeschlossen, der durch eine Spule 54 und einen Kondensator 55 gebildet ist. Die Induktivität L₅₄ der Spule 54 und die Kapazität C₅₅ des Kondensator 55 sind so bemessen, daß die Resonanzfrequenz des Serienschwingkreises 53 gleich der Frequenz f_{G} der von der Wechselspannungsquelle 14 gelieferten Wechselspannung U_{G} ist. Zur genauen Abstimmung des Serienschwingkreises 53 auf die Resonanzfrequenz ist vorzugsweise der Kondensator 55 einstellbar.

Die mit der Sekundärwicklung 52 verbundene Klemme des Kondenators 55 liegt an Masse. Der Verbindungspunkt zwischen der anderen Klemme des Kondensators 55 und der Spule 54 bildet den Abgriff 56 des Serienschwingkreises. An diesen Abgriff 56 ist eine Verstärkerstufe 60 angeschlossen, die durch einen Feldeffekttransistor 61 mit einem Gate-Widerstand 62, einem Source-Widerstand 63, einem Drain-Widerstand 64 und einem parallel zum Source-Widerstand 63 liegenden Kondensator 65 gebildet ist. Die mit dem Abgriff 56 verbundene Gate-Elektrode und die Source-Elektrode sind über die Widerstände 62 bzw. 63 mit Masse verbunden, während die Drain-Elektrode über den Widerstand 64 an die positive Versorgungsspannung +U_{B} gelegt ist. Somit verstärkt die Verstärkerstufe 60 die Spannung U_{C}, die zwischen dem Abgriff 56 und Masse am Kondensator 55 des Serienschwingkreises 53 besteht.

Der Verstärkerstufe 60 ist eine Impedanzwandlerstufe 66 nachgeschaltet, die durch einen als Emitterfolger geschalteten npn-Transistor 67 mit einem Emitterwiderstand 68 gebildet ist. Die Basis des Transistors 67 ist mit der Drain-Elektrode des Feldeffekttransistors 61 verbunden, an der die verstärkte Spannung zur Verfügung steht. An den Ausgang der Impedanzwandlerstufe 66, der durch den Verbindungspunkt zwischen dem Emitter des Transistors 67 und dem Emitterwiderstand 68 gebildet ist, ist eine Demodulator- und Abgleichschaltung 70 angeschlossen, die in beliebiger, an sich bekannter Weise ausgebildet sein kann und deshalb nur durch einen Schaltungsblock symbolisch dargestellt ist. Die Demodulatorschaltung 70 demoduliert die durch die Einflüsse von Inhomogenitäten amplitudenmodulierte Wechselspannung mit der Trägerfrequenz f_{G}, wodurch das gewünschte Differenzsignal erhalten wird, das als Ausgangssignal U₂₅ abgegeben wird. Die Demodulation kann beispielsweise durch eine phasenempfindliche Gleichrichtung erfolgen, wobei als Referenzsignal aufgrund der gleichen Phasenlage die zur Speisung der Geberelektrode 21 verwendete Wechselspannung U_{G} herangezogen werden kann. In der Demodulator- und Abgleichschaltung 70 kann ferner ein Nullpunktabgleich vorgenommen werden, damit eine durch unterschiedliche Grundkapazitäten der Sensorelektroden oder auch durch eine kapazitive Einkopplung des zur Demodulation benötigten Referenzsignals verursachte Unsymmetrie so abgeglichen wird, daß das Ausgangssignal bei fehlendem Einfluß von Inhomogenitäten tatsächlich den Wert Null aufweist. Derartige Maßnahmen sind dem Fachmann bekannt und werden deshalb hier nicht näher erläutert.

Die vorstehende Beschreibung der Signalgewinnungsschaltung 25 gilt natürlich auch für die Signalgewinnungsschaltung 35, die genau den gleichen Aufbau und die gleiche Funktionsweise hat.

In Fig. 4 ist eine andere Ausführungsform der Signalgewinnungsschaltung 25 dargestellt, die sich von derjenigen von Fig. 3 nur dadurch unterscheidet, daß die Primärwicklung 51 eine Mittelanzapfung 57 aufweist, die an dem Bezugspotential der Wechselspannungsquelle 14, im vorliegenden Fall also am Massepotential liegt. Dadurch ist die Primärwicklung 51 in zwei Hälften 51a und 51b unterteilt, die entgegengesetzt wirkend mit den Sensorelektroden 22 bzw. 23 verbunden sind. Die beiden Primärwicklungshälften 51a und 51b können natürlich auch durch zwei getrennte Primärwicklungen gebildet sein, die mit entgegengesetztem Wicklungssinn, vorzugsweise bifilar, auf den Spulenkern des Übertragers 50 gewickelt sind.

Alle übrigen Bestandteile der Ausführungsform von Fig. 4 stimmen mit denjenigen der Ausführungsform von Fig. 3 überein und sind deshalb mit den gleichen Bezugszeichen wie dort versehen.

Bei der in Fig. 3 dargestellten Ausführungsform der Signalgewinnungsschaltung ergibt sich die Differenzbildung zwischen den Ausgangssignalen der beiden kapazitiven Sensorelektroden 22 und 23 durch die gegensinnige galvanische Kopplung über die gemeinsame Primärwicklung 51 des Übertragers 50. Bei der Ausführungsform von Fig. 4 erfolgt die Differenzbildung durch die induktive Kopplung über die beiden entgegengesetzt wirkenden Primärwickungshälften 51a, 51b.

In beiden Fällen wird das Differenzsignal durch den Resonanzbetrieb des sekundärseitig angekoppelten Serienschwingkreises mit geringer Bandbreite frequenzselektiv verstärkt, wodurch insbesondere niederfrequente Signalanteile, wie sie durch statisch geladene Partikel verursacht werden, unterdrückt werden. Zudem weist die Differenzschaltung eine sehr niedrige Eingangsimpedanz auf, da die sekundärseitige Impedanz, die im Resonanzfall nur noch aus dem ohmschen Anteil der Schwingkreisbestandteile besteht, durch den Übertrager mit dem Quadrat des Windungszahlverhältnisses auf die Primärseite transformiert wird. Durch die niedrige Eingangsimpedanz wird insbesondere der Einfluß von Massekapazitäten unterdrückt.

Anstelle der Spannung am Kondensator könnte ebensogut die Spannung an der Spule des Serienschwingkreises abgegriffen werden. Bei den Ausführungsbeispielen von Fig. 3 und 4 wäre dann vorzugsweise die Lage von Kondensator und Spule zu vertauschen, damit die zu verstärkende Spannung wieder zwischen dem Abgriff des Serienschwingkreises und Masse abgegriffen wird.

Die beschriebene Signalgewinnungsschaltung ist nicht auf die Verwendung bei den als Beispiel dargestellten kapazitiven Differenzsensoren mit zwei einstückigen Sensorelektroden beschränkt. Sie kann ebensogut bei Differenzsensoren verwendet werden, deren Sensorelektroden - wie ebenfalls aus der eingangs erwähnten DE-OS 34 33 148 bekannt - jeweils aus mehreren Teilelektroden bestehen, die auch miteinander verschachtelt sein können.

## Patentansprüche

1. Kapazitiver Differenzsensor mit einer Schaltungsanordnung zur Signalgewinnung mit zwei Sensorelektroden, von denen jede einer von einer elektrischen Wechselspannungsquelle gespeisten Geberelektrode gegenüberliegt, wobei die Schaltungsanordnung so ausgebildet ist, daß sie ein Differenzsignal erzeugt, das der Differenz der in den beiden Sensorelektroden influenzierten Verschiebungsströme entspricht, dadurch gekennzeichnet, daß die beiden Sensorelektroden über die Eingänge eines Übertragers gegensinnig miteinander gekoppelt sind, wobei dei Ausgänge des Übertragers an einen Serienschwingkries gekoppelt sind, dessen Resonanzfrequenz der Frequenz der Wechselspannungsquelle entspricht, und daß das Differenzsignal an einem Abgriff des Serienschwingkreises abgegriffen wird.

2. Kapazitiver Differenzsensor mit einer Schaltungsanordnung nach Anspruch 1, dadurch gekennzeichnet, daß der Übertrager eine Primärwicklung und eine Sekundärwicklung aufweist, daß die beiden Sensorelektroden mit der einen bzw. der anderen Klemme der Primärwicklung verbunden sind, und daß der Serienschwingkreis an die beiden Klemmen der Sekundärwicklung angeschlossen ist.

3. Kapazitiver Differenzsensor mit einer Schaltungsanordnung nach Anspruch 2, dadurch gekennzeichnet, daß die Primärwicklung durch eine Mittelanzapfung in zwei Wicklungshälften unterteilt ist, und daß die Mittelanzapfung an das Bezugspotential der Wechselspannungsquelle gelegt ist.

4. Kapazitiver Differenzsensor mit einer Schaltungsanordnung nach Anspruch 3, dadurch gekennzeichnet, daß die beiden Hälften der Primärwicklung durch zwei gegensinnig gewickelte getrennte Primärwicklungen gebildet sind.

5. Kapazitiver Differenzsensor mit einer Schaltungsanordnung nach Anspruch 4, dadurch gekennzeichnet, daß die beiden Primärwicklungen bifilar gewickelt sind.

6. Kapazitiver Differenzsensor mit einer Schaltungsanordnung nach einem der vorhergehenden Ansprüche, dadurch gekennzeichnet, daß an den Abgriff des Serienschwingkreises ein Verstärker zur Verstärkung der abgegriffenen Spannung angeschlossen ist.

7. Kapazitiver Differenzsensor mit einer Schaltungsanordnung nach Anspruch 6, dadurch gekennzeichent, daß dem Verstärker ein Demodulator nachgeschaltet ist.

## Claims

1. Capacitive difference sensor comprising a circuit arrangement for signal recovery having two sensor electrodes, each of which lies opposite a transmitting electrode fed by an electrical AC voltage source, the circuit arrangement being so constructed that it generates a differential signal which corresponds to the difference of the displacement currents induced in the two sensor electrodes, **characterized in that** the two sensor electrodes are coupled with each other in opposite senses via the inputs of a transformer, the outputs of said transformer being coupled to a series resonance circuit of which the resonance frequency corresponds to the frequency of the AC voltage source, and that the differential signal is collected at a tap of the series resonance circuit.

2. Capacitive difference sensor comprising a circuit arrangement according to claim 1, **characterized in that** the transformer has a primary winding and a secondary winding, that the two sensor electrodes are connected to the one and the other terminal of the primary winding, respectively, and that the series resonance circuit is connected to the two terminals of the secondary winding.

3. Capacitive difference sensor comprising a circuit arrangement according to claim 2, **characterized in that** the primary winding is divided by a centre tap into two winding halves and that the centre tap is connected to the reference potential of the AC voltage source.

4. Capacitive difference sensor comprising a circuit arrangement according to claim 3, **characterized in that** the two halves of the primary winding are formed by two oppositely wound separate primary windings.

5. Capacitive difference sensor comprising a circuit arrangement according to claim 4, **characterized in that** the two primary windings are wound in bifilar manner.

6. Capacitive difference sensor comprising a circuit arrangement according to claim 1, **characterized in that** an amplifier is connected to the tap of the series resonance circuit for amplifying the tapped voltage.

7. Capacitive difference sensor comprising a circuit arrangement according to claim 6, **characterized in that** the amplifier is followed by a demodulator.

## Revendications

1. Capteur capacitif différentiel avec un arrangement de circuit pour l'acquisition de signaux, équipé de deux électrodes dont chacune est en face d'une électrode émettrice alimentée par une source électrique de tension alternative, l'arrangement de circuit étant conçu de façon à générer un signal différentiel qui correspond à la différence entre les courants de déplacement induits dans les deux électrodes du capteur, caractérisé en ce que les deux électrodes du capteur sont cornplées entre elles par les entrées d'un transformateur, les sorties du transformateur étant couplées à un circuit oscillant série dont la fréquence de résonance correspond à la fréquence de la source de tension alternative, et en ce que le signal différentiel est prélevé sur une prise du circuit oscillant série.

2. Capteur capacitif différentiel avec un arrangement de circuit selon la revendication 1, caractérisé en ce que le transformateur contient un enroulement primaire et un enroulement secondaire, en ce que les deux électrodes du capteur sont reliées à l'une ou l'autre borne de l'enroulement primaire, et en ce que le circuit oscillant est raccordé aux deux bornes de l'enroulement secondaire.

3. Capteur capacitif différentiel avec un arrangement de circuit selon la revendication 2, caractérisé en ce que l'enroulement primaire est subdivisé par une prise centrale en deux moitiés d'enroulement, et en ce que la prise centrale est soumise au potentiel de référence de la source de tension alternative.

4. Capteur capacitif différentiel avec un arrangement de circuit selon la revendication 3, caractérisé en ce que les deux moitiés de l'enroulement primaire sont constituées par deux enroulements primaires séparés enroulés en sens inverse.

5. Capteur capacitif différentiel avec un arrangement de circuit selon la revendication 4, caractérisé en ce que les deux enroulements primaires sont bifilaires.

6. Capteur capacitif différentiel avec un arrangement de circuit selon l'une des revendications précédentes, caractérisé en ce qu' un amplificateur pour l'amplification de la tension prélevée est raccordé sur la prise du circuit oscillant série.

7. Capteur capacitif différentiel avec un arrangement de circuit selon la revendication 6, caractérisé en ce qu'un démodulateur est monté en aval de l'amplificateur.
